# EUROPEAN PATENT SPECIFICATION

(11) **EP 3 845 439 B1**
(45) Date of publication and mention of the grant of the patent: **04.12.2024**
(21) Application number: 19853339.0
(22) Date of filing: 30.08.2019
(51) Int. Cl.: B62D 25/08, E05B 83/24, B62D 25/12, B62D 21/15

(54) **FRONT END FRAME FOR VEHICLE, AND VEHICLE**
FRONTAUFBAU FÜR FAHRZEUG UND FAHRZEUG
CADRE D'EXTRÉMITÉ AVANT POUR VÉHICULE ET VÉHICULE

(30) Priority: 31.08.2018 CN 201811011371
(43) Date of publication of application: 07.07.2021
(73) Proprietor: Great Wall Motor Company Limited, Baoding, Hebei 071000 (CN)
(72) Inventor: WEI, Wei, Baoding, Hebei 071000 (CN); WANG, Changyi, Baoding, Hebei 071000 (CN); HUANG, Chuangju, Baoding, Hebei 071000 (CN); SHAO, Bei, Baoding, Hebei 071000 (CN); DUAN, Rui, Baoding, Hebei 071000 (CN); LIN, Shubin, Baoding, Hebei 071000 (CN)
(74) Representative: Ström & Gulliksson AB
(86) International application number: PCT/CN2019/103661
(87) International publication number: WO 2020/043186

(56) References cited:
- WO-A1-2017/222020
- CN-U- 202 765 105
- CN-U- 202 782 647
- CN-U- 204 659 462
- CN-U- 205 387 146
- CN-U- 205 706 895
- DE-A1- 102013 209 789
- US-A1- 2011 011 661
- US-A1- 2011 011 661
- US-A1- 2017 313 361
- US-A1- 2019 233 016

## Description

### FIELD

The present invention relates to the technical field of vehicles, in particular to a front end frame for a vehicle and a vehicle.

### BACKGROUND

As people's living standard is improved, people have higher requirements for automobiles. The comfortability, safety, power and durability of automobiles are the main factors considered by people when buying automobiles. Therefore, all of the factors should be considered comprehensively when automobiles are designed. As an important component of the automobile body, the front end frame of the automobile body has important influence on the performance of the structure of the automobile.

In existing vehicles, the engine hood lock is usually mounted on the front end frame of the vehicle. When the engine hood applies force to snap-fit the engine hood so as to lock the engine hood to the engine hood lock, the engine hood produces impact force on the engine hood lock. The impact force may damage the connection mechanism of the front end frame and affect the structure of the vehicle body.

Background art is reflected for instance in WO2017/222020A1, DE10 2013 209789A1, US2017/313361A1 and US2011/011661A1.

### SUMMARY

In view of the above problems, the present invention aims to provide a front end frame, which has a simple structure, is conducive to increasing the structural strength of the front end of the vehicle, and can effectively transfer the force applied by the engine hood to the front end structure of the vehicle.

To attain the object described above, the present invention employs the following technical scheme: The present invention provides a front end frame for a vehicle. The front end frame comprises locking brackets respectively mounted on longitudinal beams on either side of the vehicle, wherein a cross beam is connected between the two locking brackets, each locking bracket is further connected with an inclined beam that extends towards the rear side of the vehicle from the locking bracket when mounted on the vehicle and is used for fixing to the vehicle body.

Furthermore, the two inclined beams extend away from each other in a direction away from the locking brackets.

Furthermore, the cross beam and the inclined beam are mounted on the top of the locking brackets; the bottom of each locking bracket is provided with a mounting structure for mounting on the longitudinal beam.

Furthermore, the locking bracket comprises a first plate and a second plate arranged opposite to each other, the first protrusions protruding toward the second plate are arranged on two opposite sides of the first plate respectively, the second protrusions protruding toward the first plate are arranged on two opposite sides of the second plate respectively, and the first plate and the second plate are fixed together by welding the first protrusions and the second protrusions.

Furthermore, both the first plate and the second plate are stamped parts formed by stamping steel plates.

Furthermore, the inclined beam is fixed to the top of the first plate and the top of the second plate by welding, and the cross beam is connected and fixed to the inclined beams; and/or,
the bottom of the first plate and the bottom of the second plate are separated from each other so that they are disposed on two opposite sides of the longitudinal beams respectively, and the bottom of the first plate and the bottom of the second plate are provided with mounting holes for mounting to the longitudinal beams respectively.

Furthermore, the end of the inclined beam mounted on the locking bracket is provided with an aperture for arranging an engine hood lock at a position corresponding to the space between the first plate and the second plate, and a mounting part having a mounting hole for fixing the engine hood lock is provided at an edge of the aperture.

According to an example not forming part of the invention, the top of the locking bracket is provided with a first mounting structure for mounting the cross beam and the inclined beam.And the first mounting structure is a symmetric structure arranged symmetrically;
the bottom of the locking bracket is provided with a second mounting structure for mounting the longitudinal beam, and the second mounting structure is arranged symmetrically with a center of symmetry that is the same asthe first mounting structure.

According to an example not forming part of the invention, the locking bracket comprises a first bracket part provided with the first mounting structure, a second bracket part provided with the second mounting structure, and a third bracket part connected between the first bracket part and the second bracket part.

According to an example not forming part of the invention, the second bracket part and the third bracket part are respectively a Π-shaped structure composed of two vertical plates and a cross plate connected between the two vertical plates, the width of the second bracket part is greater than the width of the third bracket part, and the third bracket part is fixed to the top surface of the second bracket part and forms a step-shaped structure;
the first bracket part comprises a first vertical plate and a second vertical plate that are fixed on the top surface of the third bracket parts and opposite to each other, the first mounting structure is a bent part formed by bending the top end of the first vertical plate and the top end of the second vertical plate towards each other, and a first mounting hole is arranged in the bend part; the second mounting structure of the locking bracket is second mounting holes arranged on the two vertical plates of the second bracket part respectively, and the second mounting holes are arranged symmetrically on the two vertical plates.

Furthermore, a radiator support is fixed on the cross beam, and the radiator support extends laterally and downwards from the middle part of the cross beam respectively, fixing parts for fixing the heat radiator are arranged at two opposite ends of the radiator support respectively.

Furthermore, the front end frame further comprises radiator brackets are fixed on the locking brackets for mounting a radiator respectively; and/or,
the front end frame further comprises head lamp mounting brackets fixed on the locking brackets for mounting head lamps respectively.

The front end frame provided by the present invention can increase the structural strength of the front end of the vehicle, has a simple structure, and is easy to detach and repair. In addition, when the engine hood is snap-fitted and thereby locked to the locking brackets, the impact force applied to the locking brackets can be transferred through three channels, i.e., the force is transferred through the cross beam between the two locking brackets, transferred through the longitudinal beams of the vehicle, and transferred through the inclined beams; in that way, the force transfer is more efficient and the stress is more uniform, so as to ensure the strength of the lock area, and avoid damage of the front end structure of the vehicle caused by the impact of the engine hood on the engine hood lock.

According to another aspect of the present invention, the present invention further provides a vehicle, which is provided with longitudinal beams and the front end frame described above, wherein the two locking brackets of the front end frame are mounted on the longitudinal beams at the two sides of the vehicle respectively.

Furthermore, the end of the inclined beam of the front end frame away from the locking bracket is fixed to a wheel guard reinforcing plate of the vehicle.

Compared with the prior art, the vehicle has the same advantages as the front end frame described above, and the advantages will not be further detailed here.

Other features and advantages of the present invention will be further detailed in the embodiments hereunder.

### BRIEF DESCRIPTION OF THE DRAWINGS

The accompanying drawings, which constitute a part of the present invention, are provided to facilitate further understanding the present invention; the illustrative embodiments and associated description in the present invention are provided to explain the present invention, and shall not be deemed as constituting any undue limitation to the present invention. In the figures:
Fig. 1 is a schematic structural diagram of the front end frame according to an embodiment of the present invention;
Fig. 2 is a structural schematic view of the front end frame shown in Fig. 1 in a exploded state;
Fig. 3 is a schematic structural view of the inclined beam;
Fig. 4 is a schematic structural view of the locking bracket;
Fig. 5 is a schematic structural view of the locking bracket viewed from another angle;
Fig. 6 is a schematic structural view of the locking bracket viewed from still another angle;
Fig. 7 is a schematic structural view of the front end frame according to another embodiment of the present invention;
Fig. 8 is an enlarged view of the part A in Fig. 1;
Fig. 9 is a top view of the front end frame shown in Fig. 7;
Fig. 10 is a schematic structural view of the locking bracket;
Fig. 11 is a sectional view of the locking bracket shown in Fig. 10;
Fig. 12 is a structural schematic view of the engine hood lock mounted on the locking bracket;
Fig. 13 is an enlarged view of the part B in Fig. 12;
Fig. 14 is a structural schematic view of the front end frame mounted on a vehicle.

### Reference Numbers:

1 - locking bracket; 101 - first plate; 1011 - first protrusion; 1012 - mounting hole; 1013 - radiator support mounting hole; 102 - second plate; 1021 - second protrusion; 11 - first bracket; 111 - first vertical plate; 112 - second vertical plate; 113 - bent part; 114 - first mounting hole; 12 - second bracket; 121 - second mounting hole; 13 - third bracket; 2 - cross beam; 3 - inclined beam; 301 - mounting part; 302 - cross beam fixing hole; 303 - aperture; 304 - protrusion; 4 - engine hood lock; 41 - first corner part; 42 - second corner part; 5 - longitudinal beam; 6 - wheel guard reinforcing plate; 7 - radiator support; 701 - fixing part; 8 - radiator bracket; 9 - head lamp mounting bracket

### DETAILED DESCRIPTION

Hereunder some embodiments of the present invention will be detailed with reference to the accompanying drawings. It should be understood that the embodiments described herein are only provided to describe and explain the present invention rather than constitute any limitation to the present invention.

It should be noted that the embodiments and the features in the embodiments can be combined freely, provided that there is no confliction among them.

In the description of the present invention, it should be understood that the orientation or position relations indicated by terms "center", "longitudinal", "transverse", "length", "width", "thickness", "above", "below", "left", "right", "vertical", "horizontal", "top", "bottom", "axial", "radial", or "circumferential", etc., are based on the orientation or position relations indicated in the accompanying drawings. They are used only to ease and simplify the description of the present invention, rather than indicate or imply that the involved device or component must have a specific orientation or must be constructed and operated in a specific orientation. Therefore, the use of these terms shall not be deemed as constituting any limitation to the present invention. In addition, "inside" and "outside" usually refer to inside and outside with respect to the outlines of the components.

In addition, the terms "first" and "second" are used only for description purpose, and shall not be interpreted as indicating or implying relative importance or implicitly indicating the quantity of the indicated technical feature. Hence, a feature confined by "first" or "second" may explicitly or implicitly comprise at least one such feature.

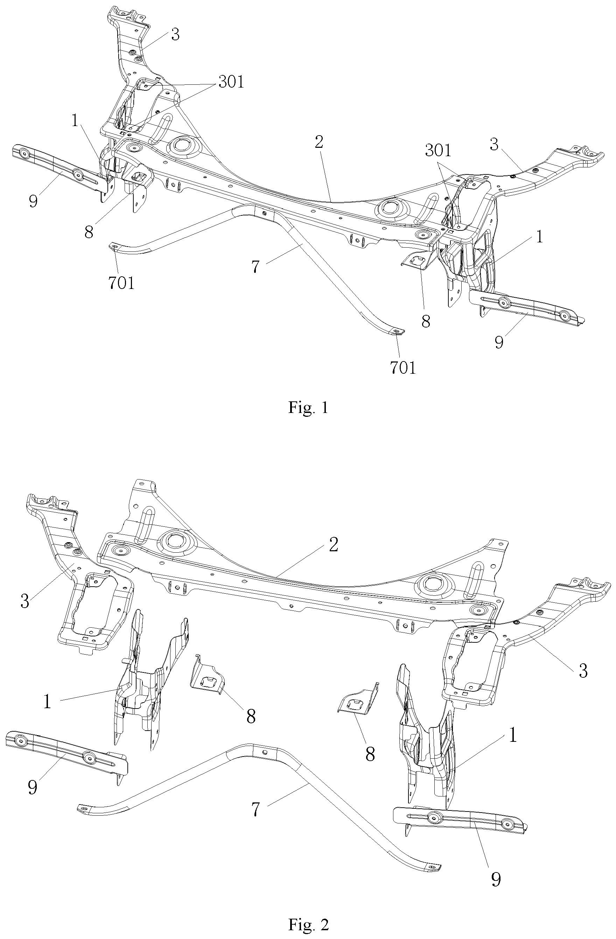

The present invention provides a front end frame for a vehicle. As shown in Figs. 1 and 2, the front end frame comprises locking brackets 1 respectively mounted on longitudinal beams 5 on either side of the vehicle, wherein a cross beam 2 is connected between the two locking brackets 1, each locking bracket 1 is further connected with an inclined beam 3 that extends towards the rear side of the vehicle from the locking bracket 1 when mounted on the vehicle and is used for fixing to the vehicle body.

When the front end frame provided by the present invention is mounted on a vehicle, the two locking brackets 1 are respectively fixed to the longitudinal beams of the vehicle, and the inclined beams 3 extend to the rear side and are fixed to other structures of the vehicle (e.g., wheel guard reinforcing plates of the vehicle, or other fixing structures that have enough bearing capacity); the front end frame may increase the structural strength of the front end of the vehicle, and has a simple structure and is easy to detach and repair. In addition, since the engine hood lock is mounted on the locking bracket 1, the impact force applied on the locking bracket 1 can be transferred through three channels when the engine hood is snap-fitted downward and thereby locked to the locking bracket 1, i.e., the impact force is transferred through the cross beam 2 between the two locking brackets 1, transferred through the longitudinal beams 5 of the vehicle, and transferred through the inclined beams 3. In that way, the force transfer is more efficient and the stress is more uniform, so as to ensure the strength of the locking area and avoid damage to the front end structure of the vehicle caused by the impact of the engine hood on the engine hood lock.

In a specific embodiment of the present invention, as shown in Figs. 1 and 2, the two inclined beams 3 of the front end frame extend away from each other in a direction away from the locking bracket 1, so that the inclined beams 3 extend to positions where they can be connected to the wheel guard reinforcing plates of the vehicle. Moreover, the two inclined beams 3 extending away from each other are more conducive to the stability of the overall structure.

In this embodiment, the cross beam 2 and the inclined beams 3 are mounted on the top of the locking bracket 1; the bottom of each locking bracket 1 is provided with a mounting structure for mounting on the longitudinal beam 5.

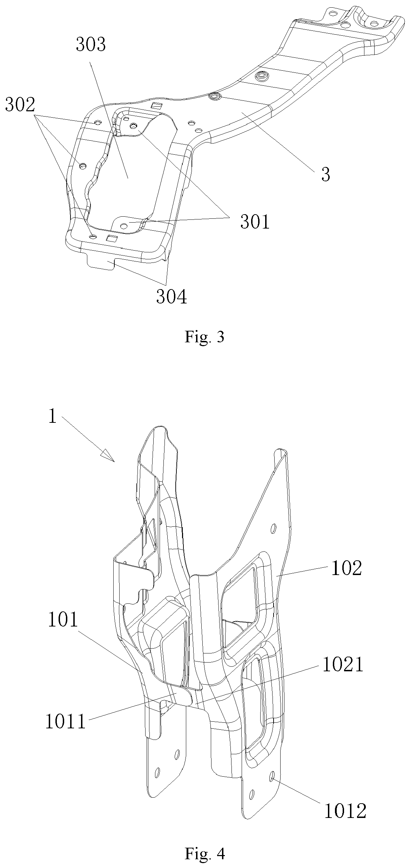

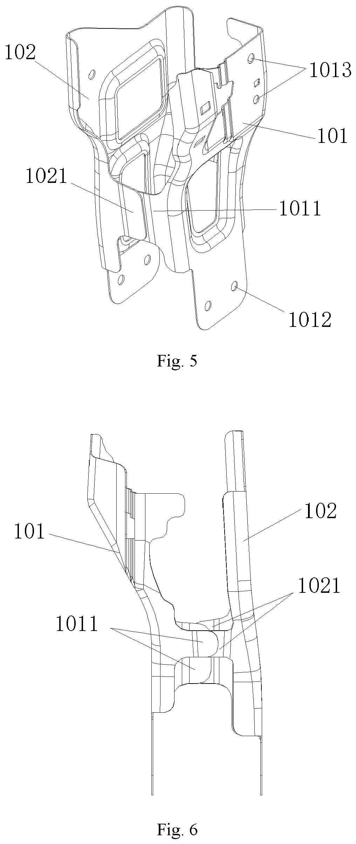

Specifically, the specific structure of the locking bracket 1 is shown in Figs. 4-6. The locking bracket 1 comprises a first plate 101 and a second plate 102 arranged opposite to each other, first protrusions 1011 protruding toward the second plate 102 are arranged on two opposite sides of the first plate 101 respectively, second protrusions 1021 protruding toward the first plate 101 are arranged on two opposite sides of the second plate 102respectively, and the first plate 101and the second plate 102 are fixed together by welding via the first protrusion 1011 and the second protrusion 1021.

Preferably, both the first plate 101 and the second plate 102 are stamped parts formed by stamping steel plates. Weight-reducing holes may be punched in the plates, and the edges of the weight-reducing holes form flanged edges to increase the rigidity of the bracket while reducing the weight. Moreover, when the two sides of the first plate 101 are folded to form the first protrusion 1011, the edges of the two sides and the first protrusion 1011 are folded at the same time to form flanged edges; likewise, the edges of the two sides of the second plate 102 and the second protrusion 1021 are also folded to form flanged edges; in that way, the first plate 1011 and the second plate 1021 are similar to a snap-fitted structure.

In this embodiment, the manufacturing method of forming two plates from steel plates by stamping and then assembling the two plates to form the locking bracket 1 may not only reduce the manufacturing cost but also achieves better rigidity of the locking bracket 1.

In this embodiment, preferably, the inclined beams 3 are fixed to the top of the first plate 101 and the top of the second plate 102 by welding, and the cross beam 2 is fixed to the inclined beam 3, wherein the cross beam 2 is preferably fixed to the inclined beam 3 by bolts.

Specifically, as shown in Figs. 2 and 3, the end of the inclined beam 3 for fixing to the locking bracket 1 is formed with a flanged edge folded toward the locking bracket 1 along the edge, and has a protrusion 304 protruding from the edge; thus, the end of the inclined beam 3 can be snap-fitted to the top of the locking bracket 1, and the flanged edge and the protrusion 304 are in close contact with the outer surfaces of the first plate 101 and the second plate 102, so that the flanged edge and the protrusion 304 can be fixed to the outer side surfaces of the first plate 101 and the second plate 102 by welding.

The inclined beam 3 is provided with a plurality of cross beam fixing holes 302, the two ends of the cross beam 2 can be placed on the inclined beams 3 respectively, and the cross beam 2 can be fixed by bolts through the cross beam fixing holes 302.

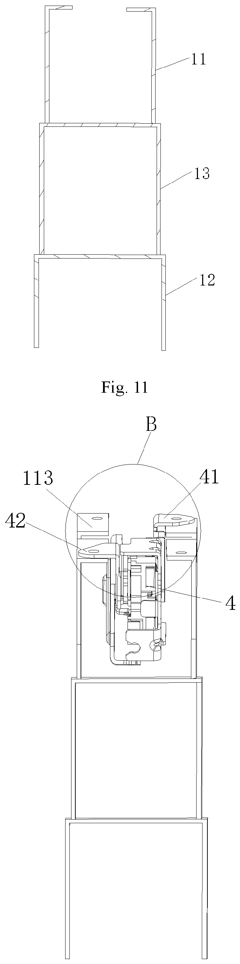

The bottom of the first plate 101 and the bottom of the second plate 102 are separated from each other so that they can be disposed on two opposite sides of the longitudinal beams 5 (Fig. 11) respectively, and the bottom of the first plate 101 and the bottom of the second plate 102 are provided with mounting holes 1012 for mounting to the longitudinal beams 5 respectively.

In this embodiment, as shown in Fig. 3, the end of each inclined beam 3 mounted on the locking bracket 1 is provided with an aperture 303 at a position corresponding to the space between the first plate 101 and the second plate 102 for placing an engine hood lock, and a mounting part 301 with a mounting hole for fixing the engine hood lock is provided on an edge of the aperture 303, and the engine hood lock may enter into the space between the first plate 101 and the second plate 102 through the aperture 303 and be fixed to the mounting part 301 on the edge of the aperture 303 by bolts.

In this embodiment, in order to facilitate the installation of a heat radiator, a radiator support 7 is fixed on the cross beam 2, and extends from the middle part of the beam 2 toward the two sides and downward respectively, and fixing parts 701 for fixing the heat radiator are respectively arranged on two opposite ends of the radiator support 7. The opposite sides of the radiator can be fixed to the fixing parts 701 at the two ends of the radiator support 7 by bolts.

The radiator support 7 in this embodiment can facilitate the installation of the heat radiator, support the cross beam 2, and increase the strength of the cross beam 2, so that improve the overall stability of the front end frame.

In addition, as shown in Figs. 1 and 2, the front end frame further comprises radiator bracket 8 fixed to the locking bracket 1 for mounting the heat radiator, and the top part of the heat radiator may be fixed to the radiator support 8. In this embodiment, the inner side of the locking bracket 1 (i.e., the first plate 101) is provided with radiator support mounting hole 1013, and the radiator bracket 8 can be fixed to the locking bracket 1 by bolts through the mounting holes. Of course, alternatively the radiator bracket 8 may be fixed to the locking bracket 1 by welding.

The front end frame further comprises head lamp mounting brackets 9 fixed to the locking bracket 1, and the head lamp mounting bracket 9 can be used to mount head lamps of the vehicle. The head lamp mounting bracket 9 may be fixed to the locking bracket 1 by bolts or by welding.

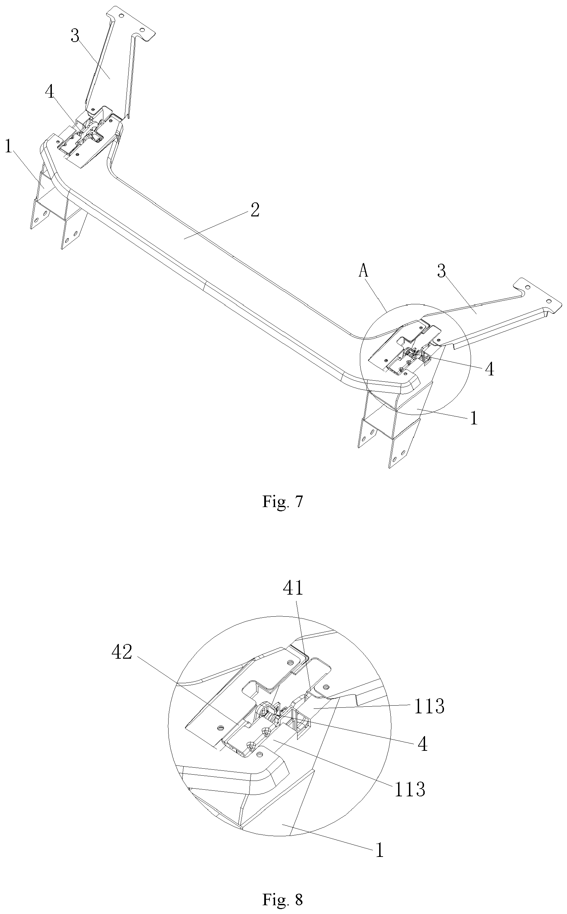

Those skilled in the art can understand that the structures of the locking bracket 1, the cross beam 2 and the inclined beam 3 are not limited to the structural form in this embodiment; any other structural form may be used. For example, Figs. 7-9 show another embodiment of the front end frame in the present invention.

In another embodiment, the cross beam 2 and the inclined beam 3 are also mounted on the top of the locking bracket 1, and the bottom of the locking bracket 1 is used to fix to the longitudinal beam 5 of the vehicle.

Specifically, the top of the locking bracket 1 is provided with a first mounting structure for mounting the cross beam 2 and the inclined beam 3; the bottom of the locking bracket 1 is provided with a second mounting structure for mounting to the longitudinal beam 5.

For the convenience of installation, the first mounting structure of the locking bracket 1 for mounting the cross beam 2 and the inclined beam 3 is a symmetric structure arranged symmetrically; the second mounting structure on the locking bracket 1 for mounting to the longitudinal beam 5 is arranged symmetrically with respect to the same center of symmetry of the first mounting structure. In that way, the locking bracket 1 can be used on either side, i.e., the locking bracket 1 can be mounted on the left longitudinal beam or the right longitudinal beam, and it is unnecessary to provide left and right locking brackets. Thus, not only the manufacturing is more convenient, but also the assembling efficiency can be improved.

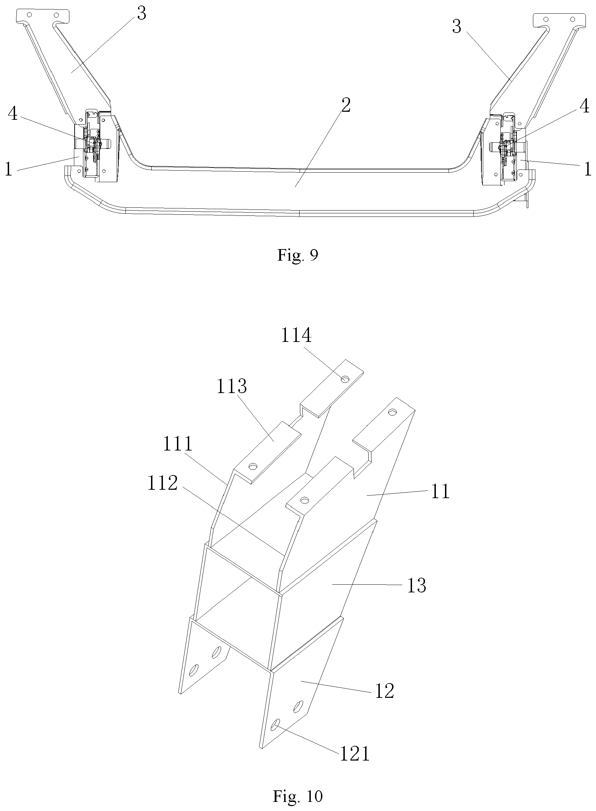

The specific structure of the locking bracket 1 in this embodiment is shown in Figs. 10 and 11. The locking bracket 1 comprises a first bracket part 11 with the first mounting structure, a second bracket part 12 with the second mounting structure, and a third bracket part 13 connected between the first bracket part 11 and the second bracket part 12.

The third bracket part 13 provided on the locking bracket 1 to facilitate manufacturing locking brackets 1 in different heights. When the locking bracket 1 is manufactured, the third bracket part 13 with appropriate height may be fixed between the first bracket part 11 and the second bracket part 12. Thus, the manufacturing cost can be reduced.

In this embodiment, preferably, the locking bracket 1 has an overall lateral symmetric structure. Specifically, the second bracket part 12 and the third bracket part 13 are respectively a II -shaped structure composed of two vertical plates and a cross plate connected between the two vertical plates , the width of the second bracket part 12 is greater than the width of the third bracket part 13, thus the third bracket part 13 is fixed to the top surface of the second bracket part 12 and forms a step-shaped structure.

The first bracket part 11 comprises a first vertical plate 111 and a second vertical plate 112 that are fixed on the top surface of the third bracket parts 13 and opposite to each other, the first mounting structure is a bent part 113 formed by bending the top end of the first vertical plate 111and the top end of the second vertical plate 112 towards each other, and a first mounting hole 114is arranged in the bend part 113; wherein, the bent part 113 of the first vertical plate 111 and the bent part 113 of the second vertical plate 112 are symmetric to each other.

The second mounting structure of the locking bracket 1 is second mounting holes 121 arranged on the two vertical plates of the second bracket part 12 respectively. The plurality of second mounting holes 121 are symmetrically arranged on the two vertical plates, and the two vertical plates can be fixed to the two sides of the longitudinal beams of the vehicle via the second mounting hole 121 respectively.

The front end frame further comprises an engine hood lock 4, which has a third mounting structure for mounting to the locking bracket 1. The third mounting structure is a centrally symmetric structure that can be both mounted to the locking brackets 1 at a first angle and at a second angle that is rotated by 180° with respect to the first angle.

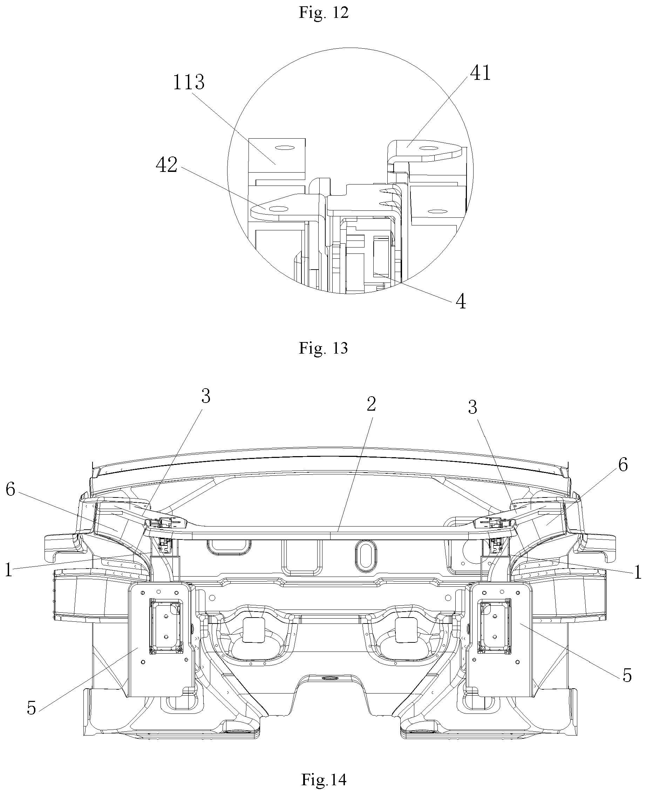

In this embodiment, the engine hood lock 4 is mounted to the first mounting structure of the locking bracket 1 for mounting the cross beam 2 and the inclined beam 3. Specifically, as shown in Figs. 12 and 13, the engine hood lock 4 comprises a first corner part 41 and a second corner part 42 for mounting to the locking brackets 1, wherein the first corner part 41 and the second corner part 42 are centrally symmetric structures, and the engine hood lock 4 can also be mounted to the first mounting structure of the locking brackets 1 after it is rotated by 180°. During the installation, as shown in Figs. 8 and 13, the first corner part 41 and the second corner part 42 are firstlyplaced on the two bent parts 113 diagonally positioned on the locking brackets 1, and the mounting holes of the first corner part 41 and the second corner part 42 correspond to the mounting holes of the bent parts 113; then, the mounting parts of the cross beam 2 and the inclined beams 3 are stacked on the top of the bent part 113; finally, the locking bracket 1, the cross beam 2, the inclined beams 3, and the engine hood lock 4 are fixed together by bolts; wherein, when the cross beam 2 and the inclined beam 3 are fixed to the top of the locking bracket 1, an opening part through which the engine hood lock 4 can be exposed is formed between the cross beam 2 and the inclined beam 3, so that the engine hood can be locked to the engine hood lock 4 from above through the opening part.

Those skilled in the art can also understand that the cross beam 2 and the inclined beams 3 are not limited to be fixed to the top of the locking bracket 1; the impact force in the lock area can also be transferred if the cross beam 2 and the inclined beams 3 are fixed to other positions of the locking bracket 1.

According to another aspect of the present invention, the present invention further provides a vehicle, which is provided with longitudinal beams and the front end frame described above. As shown in Fig. 14, the two locking brackets 1 of the front end frame are mounted on the longitudinal beams 5 at the two sides of the vehicle respectively. The end of the inclined beam 3 away from the locking bracket 1 is fixed to a wheel guard reinforcing plate 6 of the vehicle.

Of course, it can be understood that the end of the inclined beam 3 away from the locking bracket 1 may be fixed to another structure of the vehicle alternatively.

## Claims

1. A front end frame for a vehicle, comprising locking brackets (1) respectively mounted on longitudinal beams (5) on either side of the vehicle, wherein a cross beam (2) is connected between the two locking brackets (1), each locking bracket (1) is further connected with an inclined beam (3) that extends towards the rear side of the vehicle from the locking bracket (1) when mounted on the vehicle and is used for fixing to the vehicle body,
**characterised in that**
the cross beam (2) and the inclined beams (3) are mounted on the top of the locking brackets (1);
the bottom of each locking bracket (1) is provided with a mounting structure for mounting on the longitudinal beam (5), and
wherein the locking bracket (1) comprises a first plate (101) and a second plate (102) arranged opposite to each other, first protrusions (1011) protruding toward the second plate (102) are arranged on two opposite sides of the first plate (101) respectively, second protrusions (1021) protruding toward the first plate (101) are arranged on two opposite sides of the second plate (102) respectively, and the first plate (101) and the second plate (102) are fixed together by welding the first protrusions (1011) and the second protrusions (1021).

2. The front end frame according to claim 1, wherein the two inclined beams (3) extend away from each other in a direction away from the locking brackets (1).

3. The front end frame according to claim 4, wherein both the first plate (101) and the second plate (102) are stamped parts formed by stamping steel plates.

4. The front end frame according to claim 4, wherein the inclined beam (3) is fixed to the top of the first plate (101) and the top of the second plate (102) by welding, and the cross beam (2) is connected and fixed to the inclined beams (3); and/or,
the bottom of the first plate (101) and the bottom of the second plate (102) are separated from each other so that they are disposed on two opposite sides of the longitudinal beams (5) respectively, and the bottom of the first plate (101) and the bottom of the second plate (102) are provided with mounting holes (1012) for mounting to the longitudinal beams (5) respectively.

5. The front end frame according to claim 4, wherein the end of the inclined beam (3) mounted on the locking bracket (1) is provided with an aperture (303) for arranging an engine hood lock at a position corresponding to the space between the first plate (101) and the second plate (102), and a mounting part (301) having a mounting hole for fixing the engine hood lock is provided at an edge of the aperture (303).

6. The front end frame according to any of claims 1-5, wherein a radiator support (7) is fixed on the cross beam (2), and the radiator support (7) extends laterally and downwards from the middle part of the cross beam (2), fixing parts (701) for fixing the heat radiator are arranged at two opposite ends of the radiator support (7) respectively.

7. The front end frame according to any of claims 1-5, further comprising radiator brackets (8) fixed on the locking brackets (1) for mounting the heat radiator respectively; and/or,
the front end frame further comprises head lamp mounting brackets (9) fixed on the locking brackets (1) for mounting head lamps respectively.

8. A vehicle provided with longitudinal beams and the front end frame according to any of claims 1-7, wherein the two locking brackets (1) of the front end frame are mounted on the longitudinal beams (5) at the two sides of the vehicle.

9. The vehicle according to claim 8, wherein the end of the inclined beam (3) of the front end frame away from the locking bracket (1) is fixed to a wheel guard reinforcing plate (6) of the vehicle.

## Patentansprüche

1. Frontteilrahmen für ein Fahrzeug, umfassend Verriegelungsbügel (1), die jeweils an Längsträgern (5) auf beiden Seiten des Fahrzeugs montiert sind, wobei ein Querträger (2) zwischen den zwei Verriegelungsbügeln (1) verbunden ist, wobei jeder Verriegelungsbügel (1) ferner mit einem geneigten Träger (3) verbunden ist, der sich von dem Verriegelungsbügel (1) zur Rückseite des Fahrzeugs erstreckt, wenn er an dem Fahrzeug montiert ist und zum Fixieren an der Fahrzeugkarosserie verwendet wird,
**dadurch gekennzeichnet, dass**
der Querträger (2) und die geneigten Träger (3) oberhalb der Verriegelungsbügel (1) montiert werden;
die Unterseite jedes Verriegelungsbügels (1) mit einer Montagestruktur zum Montieren an den Längsträger (5) bereitgestellt ist, und
wobei der Verriegelungsbügel (1) eine erste Platte (101) und eine zweite Platte (102) umfasst, die einander gegenüberliegend angeordnet sind, wobei erste Vorsprünge (1011), die in Richtung der zweiten Platte (102) vorstehen, jeweils auf zwei gegenüberliegenden Seiten der ersten Platte (101) angeordnet sind, zweite Vorsprünge (1021), die in Richtung der ersten Platte (101) vorstehen, jeweils auf zwei gegenüberliegenden Seiten der zweiten Platte (102) angeordnet sind und die erste Platte (101) und die zweite Platte (102) durch Schweißen der ersten Vorsprünge (1011) und der zweiten Vorsprünge (1021) miteinander fixiert sind.

2. Frontteilrahmen nach Anspruch 1, wobei sich die zwei geneigten Träger (3) voneinander in eine Richtung weg von den Verriegelungsbügeln (1) erstrecken.

3. Frontteilrahmen nach Anspruch 4, wobei sowohl die erste Platte (101) als auch die zweite Platte (102) Stanzteile sind, die durch Stanzen von Stahlplatten ausgebildet werden.

4. Frontteilrahmen nach Anspruch 4, wobei der geneigte Träger (3) an der Oberseite der ersten Platte (101) und der Oberseite der zweiten Platte (102) durch Schweißen fixiert ist und der Querträger (2) mit den geneigten Trägern (3) verbunden und fixiert ist; und/oder,
die Unterseite der ersten Platte (101) und die Unterseite der zweiten Platte (102) voneinander getrennt sind, so dass sie jeweils auf zwei gegenüberliegenden Seiten der Längsträger (5) angebracht sind, und die Unterseite der ersten Platte (101) und die Unterseite der zweiten Platte (102) jeweils mit Montagelöchern (1012) zum Montieren an den Längsträgern (5) bereitgestellt sind.

5. Frontteilrahmen nach Anspruch 4, wobei das Ende des geneigten Trägers (3), der an dem Verriegelungsbügel (1) montiert ist, mit einer Öffnung (303) zum Anordnen eines Motorhaubenschlosses an einer Position bereitgestellt ist, die dem Raum zwischen der ersten Platte (101) und der zweiten Platte (102) entspricht, und ein Montageteil (301) mit einem Montageloch zum Fixieren des Motorhaubenschlosses an einem Rand der Öffnung (303) bereitgestellt ist.

6. Frontteilrahmen nach einem der Ansprüche 1-5, wobei eine Kühlerhalterung (7) an dem Querträger (2) fixiert ist und sich die Kühlerhalterung (7) seitlich und nach unten von dem Mittelteil des Querträgers (2) erstreckt, wobei Fixierteile (701) zum Fixieren des Wärmestrahlers jeweils an zwei gegenüberliegenden Enden der Kühlerhalterung (7) angeordnet sind.

7. Frontteilrahmen nach einem der Ansprüche 1-5, ferner umfassend Kühlerbügel (8), die jeweils an den Verriegelungsbügeln (1) zum Montieren des Wärmestrahlers fixiert sind; und/oder,
der Frontteilrahmen ferner Scheinwerfer-Montagebügel (9) umfasst, die jeweils an den Verriegelungsbügeln (1) zum Montieren von Scheinwerfern fixiert sind.

8. Fahrzeug, das mit Längsträgern und dem Frontteilrahmen nach einem der Ansprüche 1-7 bereitgestellt ist, wobei die zwei Verriegelungsbügel (1) des Frontteilrahmens an den Längsträgern (5) an den zwei Seiten des Fahrzeugs montiert sind.

9. Fahrzeug nach Anspruch 8, wobei das Ende des geneigten Trägers (3) des Frontteilrahmens, das von dem Verriegelungsbügel (1) abgewandt ist, an einer Radschutzverstärkungsplatte (6) des Fahrzeugs fixiert ist.

## Revendications

1. Cadre frontal d'un véhicule, comprenant des pattes de verrouillage (1) montées respectivement sur des longerons (5) de chaque côté du véhicule, dans lequel une traverse (2) est reliée entre les deux pattes de verrouillage (1), chaque patte de verrouillage (1) est en outre reliée à une poutre inclinée (3) qui s'étend vers le côté arrière du véhicule depuis la patte de verrouillage (1) lorsqu'elle est montée sur le véhicule et est utilisée pour une fixation à la carrosserie de véhicule,
**caractérisé en ce que**
la traverse (2) et les poutres inclinées (3) sont montées au sommet des pattes de verrouillage (1) ;
le bas de chaque patte de verrouillage (1) est doté d'une structure de montage pour un montage sur le longeron (5), et
dans lequel la patte de verrouillage (1) comprend une première plaque (101) et une deuxième plaque (102) agencées à l'opposé l'une de l'autre, des premières saillies (1011) saillantes vers la deuxième plaque (102) sont agencées respectivement sur deux côtés opposés de la première plaque (101), des deuxièmes saillies (1021) saillantes vers la première plaque (101) sont agencées respectivement sur deux côtés opposés de la deuxième plaque (102), et la première plaque (101) et la deuxième plaque (102) sont fixées l'une à l'autre par soudage des premières saillies (1011) et des deuxièmes saillies (1021).

2. Cadre frontal selon la revendication 1, dans lequel les deux poutres inclinées (3) s'étendent à l'écart l'une de l'autre dans une direction à l'écart des pattes de verrouillage (1).

3. Cadre frontal selon la revendication 4, dans lequel à la fois la première plaque (101) et la deuxième plaque (102) sont des pièces embouties formées par emboutissage de plaques d'acier.

4. Cadre frontal selon la revendication 4, dans lequel la poutre inclinée (3) est fixée au sommet de la première plaque (101) et au sommet de la deuxième plaque (102) par soudage, et la traverse (2) est reliée et fixée aux poutres inclinées (3) ; et/ou
le bas de la première plaque (101) et le bas de la deuxième plaque (102) sont séparés l'un de l'autre de manière à être disposés respectivement sur deux côtés opposés des longerons (5), et le bas de la première plaque (101) et le bas de la deuxième plaque (102) sont dotés respectivement de trous de montage (1012) pour un montage sur les longerons (5).

5. Cadre frontal selon la revendication 4, dans lequel l'extrémité de la poutre inclinée (3) montée sur la patte de verrouillage (1) est dotée d'une ouverture (303) pour agencer un verrou de capot de moteur à une position correspondant à l'espace entre la première plaque (101) et la deuxième plaque (102), et une partie de montage (301) ayant un trou de montage pour fixer le verrou de capot de moteur est prévue à un bord de l'ouverture (303).

6. Cadre frontal selon l'une quelconque des revendications 1 à 5, dans lequel un support de radiateur (7) est fixé sur la traverse (2), et le support de radiateur (7) s'étend latéralement et vers le bas à partir de la partie de milieu de la traverse (2), des parties de fixation (701) pour fixer le radiateur thermique sont agencées respectivement à deux extrémités opposées du support de radiateur (7).

7. Cadre frontal selon l'une quelconque des revendications 1 à 5, comprenant en outre des pattes de radiateur (8) fixées respectivement sur les pattes de verrouillage (1) pour un montage du radiateur thermique ; et/ou
le cadre frontal comprend en outre des pattes de montage de feux avant (9) fixées respectivement sur les pattes de verrouillage (1) pour un montage des feux avant.

8. Véhicule doté de longerons et du cadre frontal selon l'une quelconque des revendications 1 à 7, dans lequel les deux pattes de verrouillage (1) du cadre frontal sont montées sur les longerons (5) des deux côtés du véhicule.

9. Véhicule selon la revendication 8, dans lequel l'extrémité de la poutre inclinée (3) du cadre frontal à l'écart de la patte de verrouillage (1) est fixée à une plaque de renforcement de garde-roue (6) du véhicule.
